Europäisches Patentamt

European Patent Office

Office européen des brevets

(11) Publication number: **0 589 531 A2**

# EUROPEAN PATENT APPLICATION

(21) Application number: **93202724.6**

(22) Date of filing: **20.09.93**

(51) Int. Cl.5: **H04N 7/10**

(30) Priority: **21.09.92 NL 9201633**

(43) Date of publication of application:
**30.03.94 Bulletin 94/13**

(84) Designated Contracting States:
**AT BE CH DE DK ES FR GB GR IE IT LI LU MC NL PT SE**

(71) Applicant: **STICHTING REGIONALE KABELTELEVISIE MIDDEN-HOLLAND**
**Ridder van Catsweg 296**
**NL-2804 RS Gouda(NL)**

(72) Inventor: **Grooten, Hermanus Johannes Maria**
**Waterpeper 28**
**NL-2804 PR Gouda(NL)**

(74) Representative: **de Bruijn, Leendert C.**
**Nederlandsch Octrooibureau**
**Scheveningseweg 82**
**P.O. Box 29720**
**NL-2502 LS Den Haag (NL)**

(54) **Method and means for signal distribution via a cable television network.**

(57) It is proposed to distribute signals on frequencies above the UHF television frequency band, in this case above 860 MHz, in an exponentially modulated form for the expansion of the signal distribution capacity of a cable television network, in particular a cable television network composed of coaxial cable (9a-e, 10a-c, 11a-b). It is specifically proposed to distribute television signals in frequency modulated form (FM) in the 950-2050 MHz frequency band. By means of frequency split band techniques, the exponentially modulated signals are amplified separately from the other signals in the cable television network. For this purpose amplifiers (23, 24) comprising filter means are provided, which can be installed in combination with the existing amplifiers (12, 14, 15) in the cable television network. Adaptation of, or modifications to the underground cable network are not necessary. The exponentially modulated television signals received at a subscriber terminal or group of terminals (7, 8) may be converted if desired to the baseband and/or, in amplitude modulated form (AM), to the conventional VHF and UHF television frequency bands.

Fig-2

The invention relates to a method and means for signal distribution via a cable television network, in particular a cable television network composed of coaxial cable.

Cable television networks are long-distance signal distribution networks which, in principle, provide broadcast signals simultaneously to a large number of geographically spread subscriber terminals from one central point. Broadcast signals in this connection are understood to be radio and television programmes and other information signals which are distributed via a transmission or cable connection, or transmitted via telecommunication and broadcasting satellites, by radio and television broadcasting organisations or other bodies, publicly or otherwise. The geographic spread of cable television networks is generally limited to a city or region. Using a cable television network, programmes of purely local or regional significance can be spread alongside programmes offered by organisations which operate nationally or internationally.

As far as their network structure is concerned, cable television networks may be physically subdivided into a main or trunk network, a distribution or district network and a drop network. The district network, to which the individual subscriber terminals are connected via the drop network, is connected via the trunk network to a receiving or head-end station from which the signals are distributed over the cable television network. The trunk network serves to bridge the sometimes relatively large distances between the head-end station and the various district networks, possibly through interposed distribution stations which are also known as district stations. The drop networks may consist of so-called loop networks in which the subscriber terminals are connected in cascade form, of branch networks in which the terminals are branched off by means of a through wire, and/or of so-called mini-star networks in which the terminals are connected to the district network in star formation. Loop networks may no longer be installed in the Netherlands and have been replaced here to a large extent by branch or mini-star networks. The trunk network may be implemented both in star formation and in ring formation with the choice generally being determined by the geographical spread and extent, or in other words the number of subscriber terminals, of the cable television network concerned.

It is known that attenuation is unavoidable when transporting electrical signals through a cable, for example. In order to be able to bridge the (large) distances occurring in cable television networks, it is necessary to incorporate a number of amplifiers in series in a line, this being so-called amplifier cascading. The degree of signal attenuation is naturally dependent on the transmission medium. When using coaxial cable for example, trunks with a cable length of 500 to 600 metres can be bridged in practice before an amplification of the signal is necessary, depending on the type and quality of the cable. The district networks operate with maximum cable distances between the amplifiers in the order of magnitude of 350 m in length, whilst in the drop networks cable lengths in the order of magnitude of at most 85 m are found.

The amplifiers in the trunk network are called trunk amplifiers and generally have one or two outputs. The amplifiers in the district network, in particular the amplifiers round a district centre, generally distribute the signal over a number of outputs or directions and are known as group amplifiers. These group amplifiers may then in turn be followed by so-called output amplifiers to which the drop networks are connected. If necessary (even) more (similar) amplifiers are included between a group amplifier and output amplifier. Amplifier cascading is characteristic of a cable television network with which the present invention is concerned, as opposed to cable networks for the distribution of radio and television signals in so-called community television systems for apartment buildings and the like, where the distances to be bridged are limited.

When designing cable networks fitted with cascaded amplifiers, in essence two main problems must be overcome, these being noise and intermodulation. Both noise and intermodulation have an adverse effect on the signal to be distributed. When a signal is amplified, the amplifier adds noise which reduces signal quality. Intermodulation interference in the signal is created as a result of non-linear effects in the amplifier and places a limit on the number of channels to be transmitted. The weaker the input signal to be amplified, the more negative will be the influence of amplifier noise on the signal/noise ratio at the end of the cascade. The higher the amplitude of the output signal from the amplifier, the greater the trouble caused by intermodulation will be. Non-linearities also cause other types of distortion, such as cross modulation for example, which is also designated as a special third-order product. Hereinafter, the term intermodulation will, for the sake of convenience, be employed for all of the interference caused by non-linear effects.

It will be obvious that the problems in designing a cable television network increase more than proportionally as more amplifiers have to be connected in cascade and as more channels have to be transmitted.

It is known that, when using coaxial cable, the attenuation of the signals per unit length of cable increases strongly as a function of the frequency. In cable television networks having a relatively small number of channels to be transmitted it is therefore preferable to use frequency bands as low as possible when transmitting the signal over the trunk network. In general this is limited to the VHF (Very High Frequency) band section of 47-230 MHz. When an (even) larger number of television channels has to be distributed, the VHF band section 230-300 MHz, also designated as the S band, is often used on the trunk network. Recently a growing number of cable television networks have started to use the UHF (Ultra High Frequency) band section of 300-470 MHz, the so-called hyper-band, for the trunk network.

Within the district centres mentioned, part of the VHF signals supplied via the trunk network is then converted to the 470-860 MHz UHF television frequency bands and transmitted to the subscriber terminals via the district and drop network, together with the unconverted signals in the 47-68 MHz and 174-230 MHz VHF television frequency bands. The reason for this conversion lies in the fact that the present generation of television receivers is usually still only fitted with tuners suitable for receiving said television bands. Radio programmes are distributed in the 87-108 MHz FM radio frequency band.

The present cable television networks, having signal transmission on the trunk network in the 47-470 MHz frequency band and transmission on the district network in the VHF and UHF television bands are, taking into account the problems of noise and intermodulation, suitable for distributing approximately 30 PAL (Phase Alternating Line) television channels, which means 625 picture lines, picture carrier wave in amplitude modulation (AM), with vestigial side band attenuation and a channel bandwidth of 7 MHz in accordance with the European PAL standard. It should be noted that the capacity of a cable television network is almost always expressed in the number of television channels which can be transmitted since these require by far the largest share of the available frequency space.

The supply of television programmes from both domestic and foreign suppliers is still rising, not least as a result of developments in satellite communication techniques and the rise of subscriber television. Along with an increased supply, an increased requirement has at the same time been created for distribution capacity in the cable television network through the introduction of television signals in a new standard, such as for example MAC (Multiplexed Analog Components), including for instance D2-MAC or HD-MAC for the up and coming High Definition Television (HDTV). The possibility of, for example, transmitting all the sound channels for a multi-lingual satellite television programme likewise requires expansion of the cable television network's distribution capacity.

Expansion of the capacity on cable television networks is currently being sought, alongside the introduction of signal transmission in the hyper-band in district and drop networks, in making the trunk network also suitable for signal transmission in the UHF band, in conjunction with the district and drop networks already suited for transmission in the UHF band. The capacity can increase in this way from 30 to approximately 55 PAL channels. This number is currently considered to be the practical upper limit for cable television networks composed of coaxial cable, given intermodulation interference and also, amongst others, the technical limitations of the tuners in present generation TV sets (selectivity) and interference (inwardly directed radiation) of other ether signals. Further capacity expansion, for example by signal transmission on frequencies above the UHF television frequency band, is generally held to be impossible. For example, see the German Patent Application DE-A-3.341.664, page 3.

The reason for this lies in the fact that the attenuation of coaxial cable at frequencies higher than the UHF television frequency band is so high that, given the cable lengths of approximately 500 to 600 metres to be bridged by an amplifier in existing cable television networks, an unacceptably high gain and high output levels are necessary to achieve a signal level at the input of a next amplifier with an acceptable signal-noise ratio and intermodulation levels which can then again be amplified. Of course, the application of low-noise amplifiers may still be of some help, however amplifiers currently commercially available have more or less reached the theoretical limits with respect to noise factor and output level.

It is of course also possible to reduce the mutual distances in the cable network in order to lessen attenuation between two cascaded amplifiers. In addition to considerable investment in amplifiers and adaptation of the network infrastructure, in which it must be remembered that the cable is underground, it is furthermore from a technical viewpoint not possible to connect an unlimited number of amplifiers in cascade formation. This is because as the number of cascaded amplifiers increases, interference as a result of noise and/or intermodulation increases at the same time.

As a result of the (future) developments in the area of television already outlined above, even a number of 55 television channels will be too low eventually. Consequently further expansion of channel capacity is pursued by the use of optical fibre cable as a transmission medium in stead of, or alongside the present coaxial cable.

Since the present cable television networks are found to be eminently satisfactory, and since, for example, many billions of guilders have already been invested in over 4 million subscriber terminals in the Netherlands alone, the question arises, of course, whether the desired expansion can be achieved using the present infrastructure. The most important constraint in this is that this expansion would have to be achieved without (radical) adaptation of the underground cable network.

4

The object of the invention therefore is to provide for as much expansion of the distribution capacity of the present cable television network as possible, for television programmes in particular, at the least cost possible, while maintaining the existing network structure.

This has been achieved according to the invention in that the signals are distributed via the cable television network in exponentially modulated form at frequencies above the UHF television frequency band, and together with the other signals, said exponentially modulated signals being amplified separately from the other signals in the cable television network, using frequency split band techniques.

Primarily, the invention is based on the insight that, in order to be able to satisfy the anticipated demand for an even higher channel capacity for existing cable television networks, signal distribution must take place at frequencies above the UHF television frequency band, in this case above 860 MHz. In order to be able to achieve signal distribution at frequencies above the UHF television frequency band in the present cable television networks which are composed of coaxial cable, a choice has been made in the method according to the invention for signal distribution in exponentially modulated form at these frequencies. Accordingly television signals, for example, will now be distributed via the cable television network in exponentially modulated form instead of the conventional amplitude modulated form. Rather, it has been realised that the opinions, prevalent among those skilled in the art, which were discussed previously, to the effect that signal transmission in coaxial cable television networks is limited in practice to approximately 1 GHz as a result of noise and intermodulation, are closely connected with amplitude modulation as used for television.

Exponential modulation, also known as angle modulation, is understood to include all the modulation techniques known in practice in which the angle (in the case of a vector representation), or else the argument (in the case of an exponential notation), rather than the signal amplitude is modulated. Exponential modulation methods known in practice are frequency modulation (FM), in which the carrier wave frequency is varied with the information signal, and phase modulation (PM), in which the carrier wave signal phase is varied depending on the information signal. In the case of digitally modulated signals reference is made to Frequency Shift Keying (FSK) or Phase Shift Keying (PSK), these modulation methods corresponding with FM and PM respectively with a pulse-shaped information signal.

It has been found that at the same or even lower signal levels of the exponentially modulated television signals, as compared to the conventional amplitude modulated signals, the cable lengths occurring in practical cable television networks between cascaded amplifiers can be bridged while maintaining a sufficient signal level at the input of the next amplifier, despite the higher attenuation of coaxial cable for frequencies above the UHF television frequency band.

The importance of this finding will be understood. When distributing exponentially modulated television signals above the UHF television frequency band, the amplifier output levels for bridging cable lengths already installed can still be limited to the conventional values, after all, which means that interference caused by intermodulation products is also still limited to acceptable values, this without the necessity of expensive adaptation of the cable television network, such as for example shortening the existing cable lengths between amplifiers and so on.

By amplifying, according to the method of the invention, the exponentially modulated signals separately from the other signals in the cable network by frequency split band techniques, the channel capacity of an existing cable television network can easily be expanded by providing additional amplifiers for processing of the exponentially modulated signals in the premises where the present amplifiers are already located.

In a preferred embodiment of the method according to the invention, said exponentially modulated signals, in particular television signals, are distributed in frequency modulated (FM) form in the 950 - 2050 MHz frequency band, in particular in the 950 - 1750 MHz frequency band.

The choice of said frequency bands is based amongst others on the fact that the 950-1750 MHz frequency band is an (Intermediate Frequency) IF-band used in receiving satellite television programmes and that the television programmes via satellite are already transmitted in a frequency modulated form. By using the satellite intermediate frequency band advantageously use can be made of components which are already commercially available, including consumer receiving equipment, and of experience built up in the use of this frequency band. Television signals emanating from a satellite may be distributed if desired over the cable television network to the subscriber terminals without any conversion. Since the 950-1750 MHz frequency band is only one octave wide, no trouble is encountered due to second order interference products. This is one of the reasons why the UHF television band likewise lies within one octave, this being 470-860 MHz.

Expansion of the satellite intermediate frequency band to 2050 MHz and possibly higher can be expected in the future. Although this widening will provide extra channel capacity, it will be clear that network design for frequency bands larger than one octave will be somewhat more complex.

The number of television programmes which can be distributed in the frequency band concerned depends on the required channel bandwidth, which in turn depends on the highest permitted video frequency in the television signal (basic bandwidth) and the modulation method.

A theoretical lower limit for FM transmission bandwidth is defined by the so-called Carson bandwidth and amounts to 11 MHz for television signals under the European PAL standard, and 17 MHz, (twice the basic bandwidth) for D2-MAC. Tolerances will always have to be taken into account in practical systems. A margin with respect to the lower limit is always necessary. This lower limit is determined, as well as by the highest signal frequency, by the transmission quality desired, in terms of signal/noise ratio which is again dependent on frequency deviation. With cable television networks the channel bandwidth can be equal to the channel spacing, since no extra transmission bandwidth is required owing to energy dispersion as with satellite transmission.

In the case of frequency modulation the television signals can in practice be distributed in accordance with the European PAL standard in a channel allocation plan with a channel bandwidth of 18 MHz. A simple calculation shows that by expanding the cable television network by the 950-2050 MHz frequency band the total distribution capacity can be extended by approximately 60 television channels. Together with the channels which can already be distributed, a total distribution capacity of more than 100 television channels on the present cable television networks is now one of the possibilities.

A choice can be made in the most simple form of embodiment to apply a channel allocation plan with a channel bandwidth of 29.5 MHz, as used in the present so-called medium-power broadcasting satellites in the 950-2050 MHz frequency band. The signals received from such a satellite, converted to the satellite intermediate frequency band, can then be distributed directly from the head-end station via the trunk, district and drop networks to the cable television network terminals without additional conversion. It is of course obvious that this has a beneficial effect on the costs involved in expanding the channel capacity of the present cable television networks. When a cable television network operator does not wish to pass on the entire programme package from a specific satellite, a selection from the programme package can be distributed if desired, using known filter or frequency conversion techniques.

A further advantage of the use of the frequency band from 950 MHz is that it adjoins the UHF television frequency band which ends at 860 MHz in such a way that the area between 860-950 MHz is amply sufficient for separating conventional radio and television signal transmissions via the cable television network from the exponentially modulated signals in accordance with the invention, using relatively simple and inexpensive means. Separate amplification of the exponentially modulated signals in accordance with the invention has the further effect that intermodulation products from one frequency band will not turn up in the other frequency band. Thus the expansion of channel capacity proposed according to the invention does not affect existing signal distribution via the cable television network, nor will the present channel capacity be reduced.

Another important point for the use of the 950-2050 MHz frequency band in combination with frequency modulated television signals is the fact that there is a sufficient degree of availability of satellite receiver television sets on the consumer market which are already suitable for receiving the 950-1750 MHz and 950-2050 MHz satellite intermediate frequency bands, respectively. In a further embodiment of the method in accordance with the invention, exponentially modulated television signals received are converted to the baseband and/or, in amplitude modulated (AM) form, to the VHF and/or UHF television frequency bands at a terminal or group of terminals. In this manner it is possible to offer every connected subscriber an expansion of the programme package on the existing television receiver without the necessity for the subscriber to procure additional equipment. Use of the satellite intermediate frequency band with FM television signals has the advantage that use can be made of FM/AM television signal transducers which are commercially available per se.

Consideration can be given in particular to conversion in the said district centres of the FM television signals distributed via the trunk network, in accordance with the invention, into channels in the UHF television frequency band. When transmitting a signal in the 950-2050 MHz frequency band, the full capacity of both the UHF television frequency band and said satellite intermediate frequency band cannot of course be taken advantage of as far as to the subscriber terminals.

In yet a further embodiment form of the method in accordance with the invention this drawback is overcome by using the frequency band above 2050 MHz to, for example, 3000 MHz for signal distribution from the head-end station to the district centres. Although the (even) higher attenuation in this band has a greater, undesirable effect on the transmission, this can be compensated for by modulating the FM signals concerned with a matching, larger frequency deviation. With a larger frequency deviation the carrier-to-noise ratio can decrease in order to maintain an identical noise distance in the video signal. The greater transmission bandwidth needed forms no physical problem, given the frequency space available. Further-

6

more, the higher transmission attenuation can be compensated for by, inter alia, an adjusted threshold level of the receivers/transducers in the district centres. After all the specifications can be chosen and controlled by the cable television operator himself when transmitting to the district centres over the trunk network. No account need be taken of standards and tolerances as is conventional with consumer equipment. In order to limit the number of transducers in the district centres consideration can be given to, for example, converting the channels (programmes) delivered to the district centres above the UHF television frequency band into the UHF television frequency band using a block conversion.

Although, as was mentioned previously, attempts to expand the distribution capacity of cable television networks currently everywhere involve making the whole cable television network suitable for transmission at the entire UHF television frequency band, therefore including the trunk network, the latter is not generally held to be possible.

An alternative proposal therefore is to expand the trunk network with a supplementary optical fibre cable for the purposes of the desired increase in the number of programmes which can be distributed in the district and drop networks at the UHF television frequency band. It will be clear that the invention makes this expensive expansion superfluous. The invention can therefore be applied to advantage today, even without full transmission of the FM television signals up to the subscriber terminals.

It should be noted that in practice, distribution of frequency modulated television signals for example, is known per se. The international Patent Application 9.106.159 describes a method for the distribution of television signals transmitted by satellite for smaller networks, intended for connection of a number of houses geographically close to each other, apartments and/or hotels. As opposed to a cable television network to which the invention relates, such small systems do not employ amplifiers connected in cascade, this being characteristic for a cable television network. The problems outlined above with respect to noise and intermodulation interference consequently play no role of any significance in such a small network. In said International Patent Application a system is even described in which four parallel cables to each terminal are employed, which just from a cost point of view is extremely inappropriate and not even feasible in a cable television network to which the invention relates.

French Patent Application 2.662.895 discloses a cable television network in which frequency modulated television signals are transmitted instead of amplitude modulated signals in the UHF television frequency band. Since in the system described the television signals are distributed within the conventional frequency bands for cable television networks, the conventional amplifier output levels can be employed, since the object of the present invention, of overcoming the relatively higher cable attenuation at frequencies above the UHF television frequency band is not discussed in the system according to the French Patent Application. This French Patent Application can be seen as a further confirmation of the opinions, prevalent among those skilled in the art which were discussed previously, that signal distribution at frequencies above the UHF television frequency band on cable television networks is not considered feasible. Moreover the French Patent Application offers no solution for the object of the invention with respect to the expansion of the cable television network channel capacity.

The invention relates also to a system for the distribution of (broadcasting) signals such as radio and television programmes, comprising receiving means for receiving (broadcasting) signals supplied, means for converting the signals received to a desired frequency band and a plurality of amplifiers connected in cascade which comprise first amplification means for the amplification of signals in a first frequency band comprising frequencies in and/or below the UHF television frequency band for the distribution of the signals to individual terminals via a cable network, in particular a network composed of coaxial cable, characterised by means for distributing (broadcasting) signals supplied in exponentially modulated form at frequencies above the UHF television frequency band, wherein the amplifiers comprise second amplification means for the amplification of signals in a second frequency band comprising frequencies above the UHF television frequency band, filtering means being arranged at the input and output sides of the amplifiers for splitting the signals to be amplified into said first and second frequency band and for combining the amplified signals for distribution via the cable network, respectively.

The requirements laid down for the filters are low transmission attenuation and group delay distortion in the desired frequency band and a high rejection in the other band. The return loss at the same time must be as high. In order to minimise the mutual impact between the present signals in the cable television network and exponentially modulated signals according to the invention, filters are arranged at both the input and output sides of the amplification means.

In the preferred embodiment of the system according to the invention the first frequency band comprises frequencies up to 860 MHz which corresponds with the highest frequency of the UHF television frequency band and the second frequency band comprises frequencies over 950 MHz, that is to say the lowest frequency of the satellite intermediate frequency band for FM television signals currently in use. The first frequency band can in itself again be sub divided, for example into the conventional VHF and UHF television frequency bands. This of course also applies to the second frequency band which need not be limited to said satellite intermediate frequency band up to 1750 MHz.

In the preferred embodiment of the system according to the invention, the means for distributing television signals in exponentially modulated form are equipped to transmit said signals in frequency modulated form within channels having a practical bandwidth of 18 MHz.

If the frequency modulated television signals received from satellites can be distributed directly via the cable network, said means may simply consist of filter and coupling means for merging channels already comprised in the desired frequency band, provided by one or more satellite aerials. If desired, the channel bandwidth of 29.5 MHz already employed with medium power satellites may be retained to advantage for this purpose.

In a still further embodiment of the system according to the invention, conversion means are provided for a subscriber terminal or a group of subscriber terminals, for example in said district centres for the conversion of exponentially modulated television signals to the baseband and/or, in amplitude modulated form, to the VHF and/or UHF television frequency bands. Using these conversion means it is then possible to receive the television signals distributed according to the invention by means of a standard television receiver.

The invention further relates to means for use in a cable television network for distribution according to the invention of exponentially modulated signals at frequencies above the UHF television frequency band, in particular a first amplifier, provided with first filter means for transmitting signals in a first frequency band comprising frequencies in and/or below the UHF television frequency band, second filter means for transmitting signals in a second frequency band comprising frequencies above the UHF television frequency band, and with amplification means connected downstream of the filter means for the amplification of signals transmitted by the second filter means in said second frequency band, wherein the input side of the first and second filter means being linked together and forming the amplifier input, and the output sides of the first filter means and the amplification means forming first and second amplifier outputs, respectively. Also a second amplifier, composed of first filter means for transmitting signals in a first frequency band comprising frequencies in and/or below the UHF television frequency band, second filter means for transmitting signals in a second frequency band comprising frequencies above the UHF television frequency band, wherein said second filter means are connected downstream of amplification means so as to transmit amplified signals in said second frequency band, the output sides of the first and second filter means being linked together and forming the amplifier output, and the input sides of the first filter means and the amplification means forming first and second amplifier inputs, respectively.

This specific construction allows both amplifiers, in combination with the amplifiers already present for the VHF and UHF frequency bands, to be incorporated directly in an existing cable television network, without modification of the network structure. The amplifiers can be connected to both the trunk network and the district network.

Essentially spreading the required signal gain in the second frequency band over two amplifiers to be connected in series has constructive advantages at the same time as the technical installation advantage mentioned. Accommodating the required filters in a fixed manner in a housing limits the number of signal transitions such as connectors and the like, this being primarily an advantage at the relatively high frequencies above the UHF television frequency band. Each signal transition, namely, introduces additional undesirable attenuation which again must be compensated for with a higher gain with all of the accompanying problems.

In some cable television networks the VHF and UHF radio and television frequency bands are amplified separately. This is referred to as VHF/UHF split band cable television networks, this as opposed to VHF/UHF broad band cable television networks in which the VHF and UHF bands concerned are amplified in combination. In the case of VHF/UHF split band cable television networks the existing frequency splitting filters can be combined with the filter means in the amplifiers according to the invention or be replaced by these, as a result of which incorporation of the amplifiers concerned does not introduce any extra (transmission) attenuation.

If the amplifiers for frequencies above the UHF television frequency band should further consist of one single amplifier then these would have to have such a high output level, in order to be able to provide a sufficient signal level at a plurality of outputs for transmission over the next section of cable, that in addition to the said intermodulation interference other problems would also arise. A gain of, for example, 50 dB or more in one housing sets extremely high demands to the amplifier design, in particular with respect to additional measures to prevent oscillation through internal feed-back and thermal instabilities. Requirements are also laid down on external radiation with high output voltages. The heat dissipation within the amplifier housing likewise has its limits and has an extremely adverse effect on component lifetime as more heat is produced.

In the preferred embodiment of the amplifier according to the invention the first filter means are set up to transmit signals in a first frequency band in and/or below 860 MHz and the second filter means are set up to transmit signals in a second frequency band above 950 MHz. The frequency band between 860-950 MHz is sufficiently wide for the design of filters with sufficient rejection and minimal group delay distortion. In order to limit the influence of the additional filters on existing signal transmission as much as possible, it is further advantageous to integrate said first and second filter means.

In a practical cable network, variations in the planned signal levels are created by variation of the cable attenuation resulting from temperature fluctuations, by heat dispersion in the amplifiers used and by tolerances in the remaining components such as splitters and the like. These level variations may become unacceptable when amplifiers are cascaded. As a consequence of this, means of automatic gain control are provided in yet a further amplifier embodiment according to the invention, for example based on control of the energy content of the total amplified signal which, particularly with FM signals, is essentially dependent on the setting of the amplifier concerned.

In the preferred embodiment the means for automatic gain control of the amplifier consist of a pilot tone detection circuit for the detection of at least one pilot tone signal transmitted in the said second frequency band, and adjustable attenuator means coupled to the pilot tone detection circuit, said pilot tone detection circuit and attenuator means are connected downstream of the amplification means, the attenuator means during operation being adjustable by the pilot tone detection circuit such that the pilot tone signal is provided with a predetermined amplitude at the amplifier output.

In the embodiment of the invention in which the exponentially modulated television signals are distributed in the 950-1750 MHz satellite intermediate frequency band it is advantageous to position the pilot tone signal at the high end of the frequency band concerned, preferably at a frequency between 1750 and 1800 MHz. Positioning the pilot tone signal in the part of the band where most attenuation is anticipated, in this case at the high end of the frequency band, ensures that the output level of the amplified signals over the entire frequency band will be at or just above the desired level. When amplifying over a plurality of octaves it is worthwhile to make use of additional pilot tones suitably positioned in the frequency spectrum.

In order to prevent distortion of the signals and creation of intermodulation products as much as possible, it is advantageous to include an adjustable attenuator upstream of the amplification means, as well as means for smoothing the attenuation of the coaxial cable in the desired frequency band, in order to obtain as straight a transmission characteristic as possible over the whole frequency band.

Further to the naming of the various frequency bands, it is proposed that the section of the UHF frequency range above the UHF television frequency band, in this case the 860-3000 MHz frequency band, be called the "superband". The SHF (Super High Frequency) band at 3000 MHz - 30 GHz then adjoins the superband.

The invention is explained hereinafter in more detail with reference to the appended drawings.

Fig. 1 shows in outline the typical construction of existing cable television networks.

Fig. 2 shows in outline a system for implementing the method according to the invention.

Figs. 3, 4, 5, 6, 7 and 8 show in outline embodiments of amplifiers for use in a system for implementing the method according to the invention.

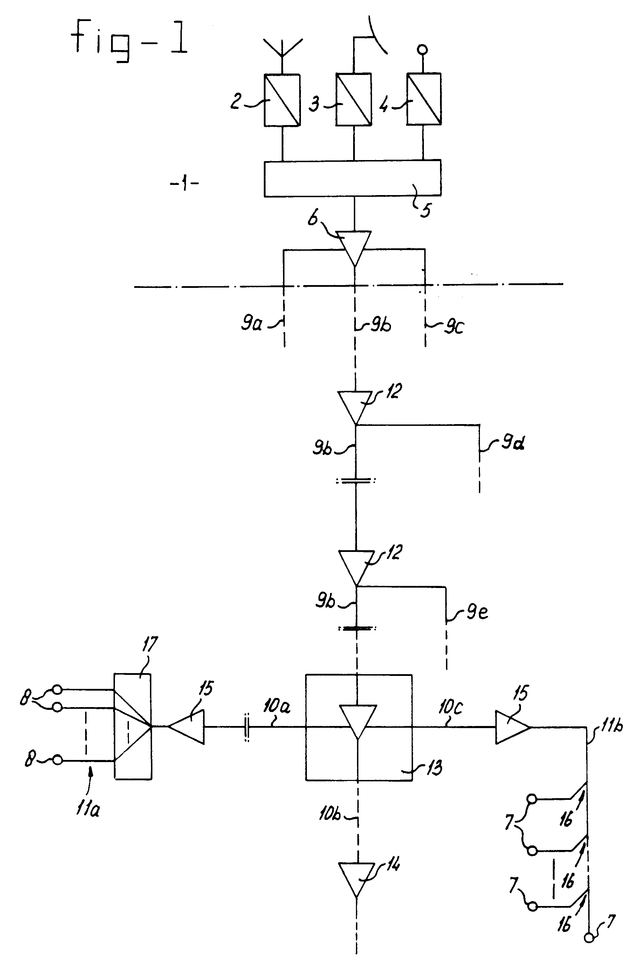

Fig. 1 shows in outline a typical construction of a cable television network for the distribution of broadcasting signals, such as radio and television programmes and other information signals which are received or supplied in a receiver or head-end station 1.

For this purpose receiving and conversion means 2 are set up in the head-end station 1 for receiving signals transmitted by terrestrial transmitters, receiving and conversion means 3 are set up for receiving signals transmitted from satellite transmitters and receiving and conversion means 4 are set up for distribution of, for example, radio and television programmes and other services provided by cable or otherwise, for example from a local studio. The converted signals are merged in the head-end station 1 by means of a coupling field 5, for distribution of the signals concerned via a cable network to individual terminals 7 and 8. The cable network, which is generally composed of coaxial cable, can be subdivided into a main or trunk network 9a, b, c, d, e connected to the head-end station 1, and a distribution or district network 10a, b, c connected thereto. The terminals 7, 8 are linked to the district network by a drop network 11a and b.

The signal to be distributed, emanating from the coupling field 5, is fed to an amplifier 6 and is then distributed over a plurality of sections of the trunk network. Each section 9a, b, c, d, e comprises a plurality of trunk amplifiers 12, connected in cascade. Depending on the attenuation of the coaxial cable used, the cable length between two next trunk amplifiers 12 can amount to from 500 to 600 metres.

At the end of the trunk network section 9a, b, c, d, e, a district centre 13 is located for distribution of the signal to the terminals 7, 8 via the district network. For the sake of simplicity only three of the sections 9a, b, c of the trunk network, connected to the head-end station 1, and likewise only three of the district network sections 10a, b, c, connected to the district centre 13, are shown. Moreover, distribution of signals, a characteristic of cable television networks, is likewise only indicated in outline by means of trunk network sections 9d, 9e.

The signals are distributed from the district amplifier(s) and possible converters located in the district centre 13, either directly or via one or more group amplifiers 14 to the drop networks in the district network. At the end of a district network section 10a, b, c, an output amplifier may be connected for supplying the distributed signals at the desired level to the terminals 7, 8. One or more group amplifiers 14 and output amplifiers 15 can in turn be incorporated in the district network, the maximum cable length between two next amplifiers amounting to approximately 100 to 300 metres. For the sake of clarity only, a group amplifier 14 is shown only in the district network section 10b.

Drop network section 11a forms a so-called mini-star section, and drop network section 11b is shown as a so-called branching network section. In the branching network section 11b, the individual terminals 7 are connected in cascade via branching elements 16. The branching elements 16 are constructed in such a way that as equal a signal level as possible is provided on terminal 7, independent of the position in the branching network. The drop network section 11a, implemented as a mini-star network, comprises a so-called mini-star distribution element 17 by which the various terminals 8 are connected to the district network in star formation.

Instead of a star-like construction of the trunk network, trunk networks constructed in ring formation are also applied in practice. Star trunk networks are advantageous in areas with ribbon developments, whilst ring networks can be applied in extensive cable television networks in which the subscriber terminals are located relatively closely to each other. In the illustrative embodiment shown of an existing, advanced cable television network, it is assumed that signals in and below the UHF television frequency band are distributed on the trunk network 9a, b, c, d, e in accordance with the VHF/UHF split band principle or in VHF/UHF broad band. In practice almost all of the Dutch cable television networks for example are (still) based on a main or trunk network suited to only distribution of signals in the VHF band, in which the signals are therefore distributed over the trunk network at frequencies as low as possible in order to make use of the lower coaxial cable attenuation at these frequencies. This is done since, taking into account the problems of noise/intermodulation described in the introduction, relatively large distances can be bridged with acceptable trunk amplifier 12 output levels. In such a cable television network it is then however necessary to place conversion means near the district centre 13, which convert the signals distributed over the trunk network to the UHF television frequency band for reception on the terminals 7, 8. For the sake of clarity these conversion means are not represented in the figure.

Amplifier cascading, as can be seen clearly from fig. 1, is characteristic for cable television networks. In practice, a minimum signal level at the amplifier input of 73 dB$\mu$V and a maximum output level in the VHF frequency band of approximately 100 dB$\mu$V and in the UHF frequency band approximately 115 dB$\mu$V are normally used. AM television signals and FM radio signals can be distributed with acceptable signal/noise and intermodulation levels, based on these input and output signal levels. Cable lengths in the order of magnitude of 500 metres between two next amplifiers can be bridged in the trunk network using the so-called coax-3 cable which has an attenuation of approximately 3 dB per 100 m in the VHF frequency band at 230 MHz and an attenuation of approximately 6 dB in the UHF frequency band at 860 MHz. This distance between the amplifiers is limited in the district networks to 100 to 300 metres owing to the distribution over a plurality of directions necessary downstream the amplifiers. Some additional gain is taken into account here for compensation of loss in filters, distributors, connectors and the like. When applying coax-12 cable for the drop network, (approximately 12 dB attenuation per 100 m at 230 MHz and approximately 24 dB attenuation at 860 MHz), cable lengths of approximately 80 m can be bridged. This also takes into account compensation for losses in branching and distribution elements in the drop network as well as attenuation in the terminal connecting boxes with the extra gain necessary at the terminals.

Measurements and calculations have shown that the attenuation of coax-3 cable at 1750 MHz is in the order of magnitude of 9 dB per 100 m. In order to be able to bridge the conventional cable length of approximately 500 m in the trunk network, amplifier output levels of approximately 120 to 125 dB$\mu$V are necessary for AM television signals at the frequency of 1750 MHz, which means DIN output levels of more than 140 dB$\mu$V. At these necessarily high signal levels many design problems arise relating both to the amplifiers and to the cable television network itself. The question is whether the existing remote amplifier power system, which is limited to 50 V alternating voltage for safety reasons, can supply sufficient power for the desired high output voltage. In this, the placement of more local feed points conflicts with a manageable cable network. Strict requirements will likewise have to be defined regarding limitation of the high frequency radiation of the amplifiers, which, at the high output levels concerned, will display transmitter-like properties. The development of heat in the amplifier casings on the street will bring its own problems. Moreover, a high power dissipation in the amplifier will have adverse effect on its lifetime. Problems can also be expected with the other passive components in the cable network, such as distributors and current injection filters. These components should have a flat frequency characteristic. Each deviation therefrom will require a compensating higher output level from the amplifier in order to meet the requirements for an adequate signal-noise ratio. As was already discussed in the introduction, as the output level of an amplifier increases, so does the interference as a consequence of intermodulation increase more than proportionately.

The design problems outlined above constitute some of the reasons on which the views, currently prevalent among those skilled in the art are based, that a coaxial cable television network of the type discussed, that is to say with cascaded amplifiers, has a distribution capacity of at most 1 GHz. In order to extend the channel capacity of the cable network, it is generally proposed to limit the distances between the various amplifiers or else to apply another transmission medium such as optical fibre cable, for example. Making the network sections smaller leads however to a larger number of amplifiers, which in practice is not possible without limit owing to the rapidly increasing interference through intermodulation which this causes and which is accompanied by a considerable investment in both equipment and installation costs, as the underground cable would have to be dug up at different places for the interposition of amplifiers. Replacing the coaxial cable with optical fibre cable or else laying an extra optical fibre trunk network alongside the existing coaxial cable network requires not only a large investment in receiving and amplifying equipment and installation costs but is also accompanied by the social inconvenience of laying new cables. Repairing optical fibre cable is furthermore still an expensive and time-consuming affair in comparison to repairing coax cable.

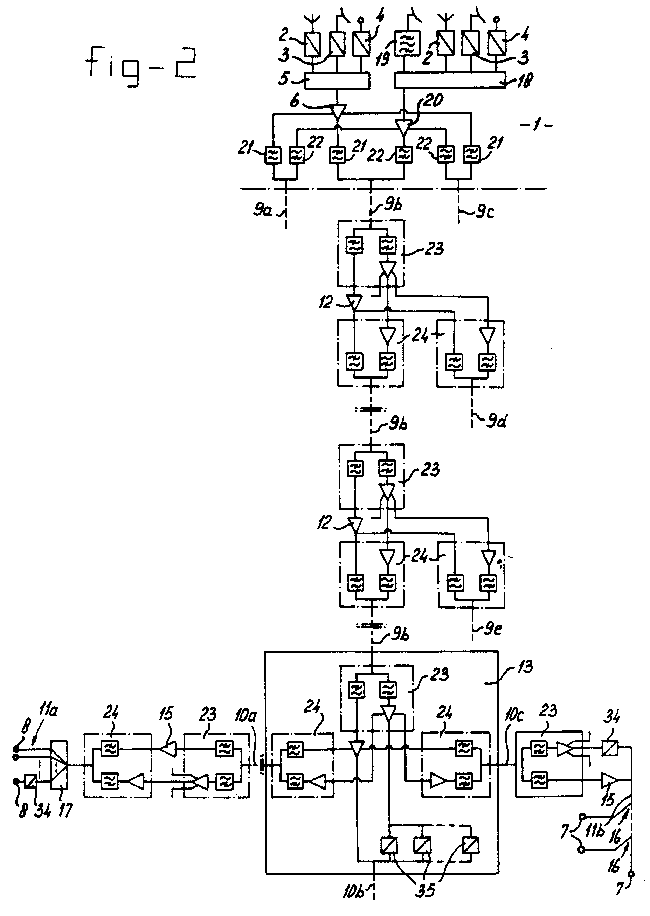

Fig. 2 shows an outline of a system constructed according to the invention, in which exponentially modulated television signals are distributed at frequencies above the UHF television frequency band instead of television signals in amplitude modulated form. In the illustrative embodiment shown, the components of the existing cable television network are indicated with the same reference numbers as in fig. 1.

A further coupling field 18 is provided in the head-end station 1 for distributing television signals supplied at frequencies above the UHF television frequency band. In the preferred embodiment of the invention the coupling field 18 is set up for distributing frequency modulated (FM) television channels in a 950-1750 MHz frequency band. Since this modulation and frequency band correspond to the modulation method and intermediate frequency band used for television transmission via communication and broadcasting satellites, it is possible to distribute the signals emitted by the Low Noise Converter (LNC) in the satellite receiver aerial directly via the cable network, as represented in outline by the direct connection of the satellite aerial output, if necessary via a filter 19, to the coupling field 18.

In accordance with the invention, the signals emanating from coupling fields 5 and 18 are separately amplified for distribution over the cable network using frequency split band techniques.

As is again represented only in outline, for this purpose an amplifier 20, for amplification of the signals at frequencies above the UHF television frequency band, and filters 21, 22 are added in the head-end station 1. The filters 21 are set up to transmit signals with frequencies below 860 MHz, while the filters 22 are constructed to transmit signals above 950 MHz. Eventually, combined signals are produced for distribution via the trunk network, in this case sections 9a, b, c of this network.

For simplicity, an additional split between the VHF/UHF television frequency bands, as is conventional in VHF/UHF split band networks, is not represented in detail. The existing trunk amplifiers 12, the group amplifier 14 and the output amplifiers 15 in the district network therefore represent either VHF/UHF broadband or else VHF/UHF split band amplifiers.

In order to avoid numerous design problems resulting from the exponentially modulated signals and the remaining signals distributed via the cable network affecting each other, it was decided to place filters at both the input and the output of the amplifiers which only transmit a frequency band concerned. The first and second amplifiers 23 and 24, which can be combined in a simple manner with the amplifiers 12, 14 and 15 in the existing cable network, are proposed especially for this purpose.

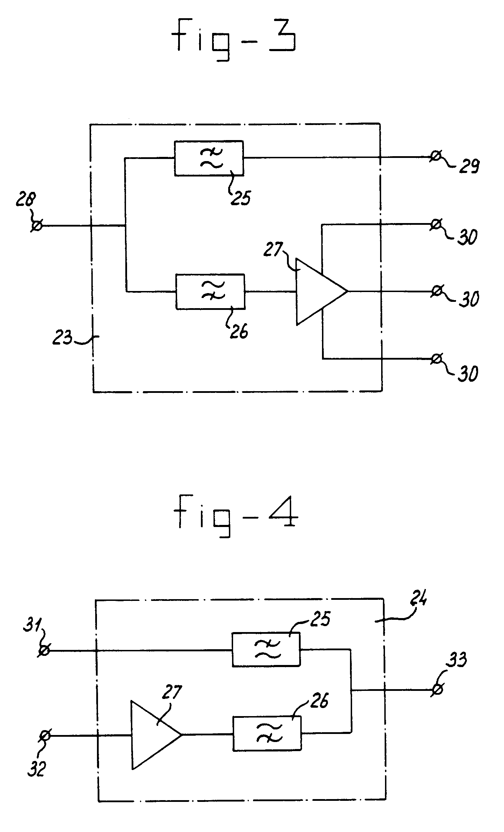

As is shown in fig. 3 and 4, the two amplifiers 23 and 24 each contain first filter means 25 to transmit frequencies at or below the UHF television frequency band, in the preferred embodiment of the invention frequencies below 860 MHz, and second filter means 26 to transmit signals at frequencies above the UHF television frequency band, in this case the superband from 950 MHz and higher, for example. Amplification means 27, suitable for amplification of signal frequencies above the UHF television frequency band, are connected in series to the second filter means 26.

The amplification means 27 are connected downstream of the second filter means 26 in the first or distribution amplifier 23, so that the first and second filter means 25, 26 are linked on their input sides and form an input 28 of the distribution amplifier 23. The output side of the second filter means 25 forms a first output 29, while the output from amplifier 27, which can be of multiple design if desired, forms one or more second output(s) 30 of the distribution amplifier 23.

In contrast, the two filter means 26 are connected downstream of the amplification means 27 in the case of the second or post-amplifier 24. The output sides of the first and second filter means 25, 26 form an output 33 of the post-amplifier, whilst the input side of the first filter means 25 forms a first input 31, and the input side of the amplification means 27 forms a second input 32 of the amplifier 24. It will be clear that connection of amplifiers 23 and 24 in the way shown in fig. 2 when installing in the cable television network will ensure inclusion of filters on both the input and output side of each amplifier for frequency split amplification of exponentially modulated signals and the remaining signals on the cable television network in accordance with the invention.

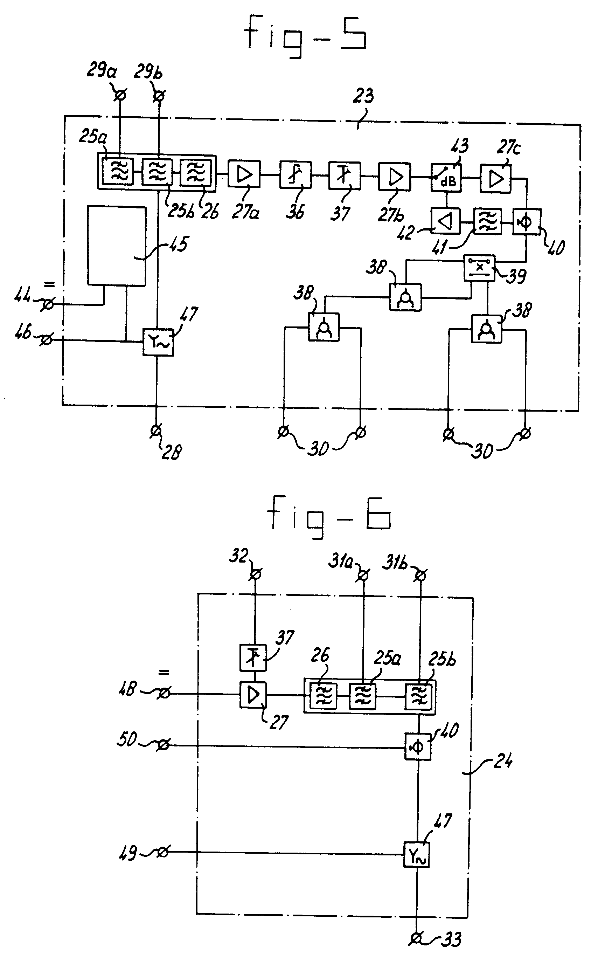

In order to minimise the effect of the transmission attenuation of the extra filters on the existing cable network, the first and second filter means are preferably combined as much as possible into one filter, as represented in fig. 5-8 by the frame encircling the filter means.

By spreading the gain of the signals above the UHF television frequency band over two amplifiers connected in series, along with a relatively simple installation in the existing cable television network in which the existing amplifiers 12, 14 and 15 can be retained as represented in fig. 2, the problems discussed earlier of too high a gain in one housing are eliminated at the same time.

Although in practice equipment is currently commercially available on a large scale capable of receiving the proposed frequency band of, for example, 950-1750 MHz for FM television signals, the possibility still remains of installing supplementary conversion means 34, 35 at the terminal or in the district centre for private use or for a group of connections respectively, for example FM/AM converters. The signal emitted by these converters can be converted both to the baseband and to one of the conventional VHF or UHF frequencies in amplitude modulated form for television reception. Suitable equipment for this purpose is known per se in practice.

As a result of converting the television signals delivered via the trunk network to a lower frequency band, for example the UHF television frequency band, into AM form according to the invention, the lower band concerned cannot of course be used independently for signal distribution. Although this method limits the total capacity of the cable television network reference can nevertheless be made to capacity expansion on the trunk network without the need for supplementary optical fibre cables.

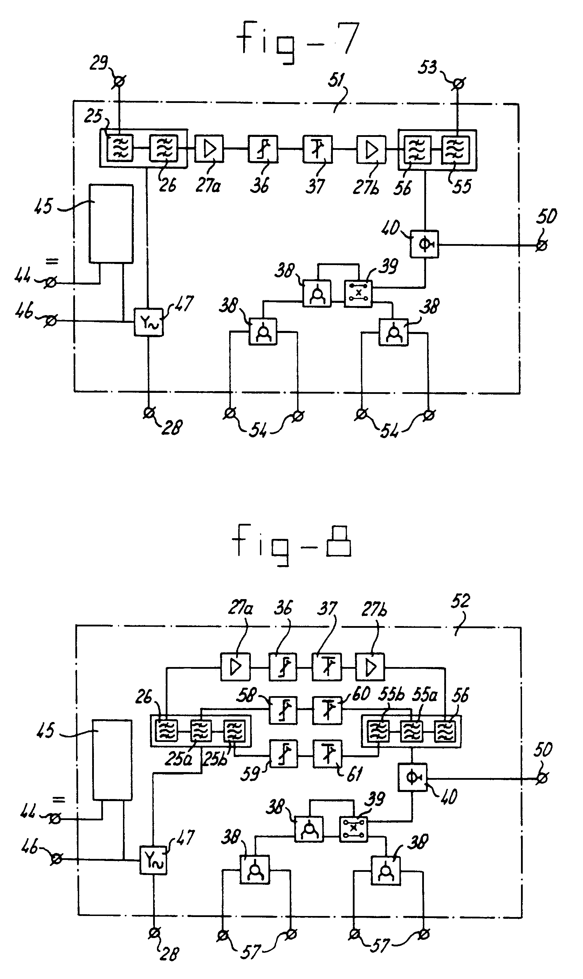

Although the amplifiers shown in fig. 3 and 4 were assembled during a practical test from components commercially available per se, amplifiers as shown in figure 5 and 6 have been designed based on measurement results.

Fig. 5 shows a proposal for a distribution amplifier 23 corresponding to fig. 3 in block diagram form, in which the amplification means 27 are composed of three cascade-connected amplification stages 27a, 27b and 27c, with an equaliser 36 and an adjustable attenuator 37 in between. The first and second filter means 25, 26 are combined into one single filter, in which the first filter means 25 are split into a part 25a for transmitting the VHF frequency band and a part 25b for transmitting the UHF television frequency band. This of course gives rise to a first amplifier output 29 split into two parts, 29a and 29b respectively.

This relates to a preferred embodiment for VHF/UHF split band cable television networks. By combining all of the frequency splits in one filter the effect of additional transmission attenuation is limited as a consequence of the additional filtering according to the invention. In embodiments for VHF/UHF broad band cable television networks the first filter means 25 are naturally not split into two parts and there is of course only one first amplifier output 29.

In the embodiment shown there are four second amplifier outputs 30, accomplished by means of three two-way splitters 38, in which at the same time circuit means 39 are provided for driving only one or a limited number of second amplifier outputs 30 if desired.

In order to automatically compensate for level variations, in this case automatically controlling the gain of the distribution amplifier 23, a so-called pilot tone branch element 40 is introduced downstream of the third amplification stage 27b for detection of a pilot tone signal transmitted over the cable television network, for example a pilot tone signal at a frequency between 1750-1800 MHz. The signal from the branch element 40 is transmitted via a small band filter 41 and an amplifier 42 connected downstream to a further adjustable attenuator 43 connected between the second and third amplification stage 27b, 27c. Using the pilot tone signal received, a control signal, which is used to hold the pilot tone signal at a predetermined level at the distribution amplifier outputs 30, is fed to the attenuator 43. If transmission takes place at frequencies above the satellite intermediate frequency band or generally when the frequency band to be transmitted comprises multiple octaves, it may be necessary to employ further pilot tones at higher frequencies.

The signal level present downstream of the second amplification stage 27b is sufficient to cope with the margin required for control and smoothing. The controlled and smoothed signal is amplified in the third amplification stage 27c to provide a signal sufficiently strong to be fed to the two-way splitters 38. The number of four amplifier outputs 30 is sufficient for application on most trunk networks.

A rectifier circuit 45, which can be externally fed if required via a connection terminal 46, is incorporated in the distribution amplifier 23. A current injection filter 47 in series with the distribution amplifier 23 input 28 is further incorporated for powering the cable television network itself. The VHF and/or UHF amplifiers 12, 14, 15 already incorporated in the network can likewise be fed via the current injection filter 47. Alternating voltage is moreover available on terminal 44 for powering one or more post-amplifiers 24.

Fig. 6 shows an embodiment of the amplifier 24 shown in fig. 4 in which the first and second filter means 25, 26 are combined in one "merging filter". In this case too, the first and second filter means 25 are split into a VHF section and a UHF section, 25a and 25b respectively, corresponding to the amplifier embodiment according to fig. 5. The two first amplifier inputs 31a and 31b may also consist of one single first input 31 for use in VHF/UHF broadband cable television networks. This post-amplifier 24 is relatively simple in construction and has only one single amplification stage 27 with adjustable attenuator 37. The post-amplifier 24 is fed with direct voltage via a connection terminal 48 and the supply voltage for the further, downstream, section of the network may be connected to a connection terminal 49. Connection terminal 50 forms a measurement point. The filter means may be accomplished in a way which is known per se in practice, like the amplification means and the remaining components mentioned.

Two further amplifiers have been developed for application in the drop networks, these being an output amplifier 51 and a mini-star amplifier 52, represented respectively in diagram form in fig. 7 and 8. The output amplifier 51 is based on the distribution amplifier 23. Because of the lower amplification required, amplification stage 27c may be omitted. Since only one output amplifier is incorporated in the entire cascade, automatic gain control may also be omitted. The VHF and UHF bands are not split further since the existing output amplifiers 15 operate with one overall input both in the VHF/UHF split band and in VHF/UHF broadband systems. In contrast to the distribution amplifier 23, filter means 55 and 56, which correspond to filter means 25 and 26, are now also connected to the output of the second amplification stage 27b with a further input 53 for merging the signals amplified by the VHF/UHF output amplifier 15 and amplification stages 27a, b already present. A combined VHF/UHF superband signal is now available at the outputs 54 for powering the terminals 7, 8 of the cable television network.

The mini-star amplifier 52 is likewise derived from the distribution amplifier 23. Since cable lengths between the group amplifier and the mini-star distribution element are kept to a limit in networks with passive mini-star distribution elements, in which no output amplifiers for the VHF and UHF television bands are applied prior to the mini-star distribution elements 17, a relatively low gain is sufficient in the mini-star distribution point for transmitting the superband through. In order to be able to satisfy the requirements with respect to relative signal levels on terminal 8, there is often a requirement in the case of passive mini-star distribution elements to be able to attenuate or smooth the signals in the VHF and UHF television frequency bands. For this purpose supplementary means for smoothing and distribution in the VHF and UHF television frequency bands are incorporated in the proposed mini-star amplifier. These are the supplementary smoothers 58, 59 and adjustable attenuators 60, 61 in fig. 8. Because the signals in the VHF/UHF band no longer have to be available externally, no separate VHF/UHF output is required, but only the combined signal outputs 57.

Practical tests have shown that, when transmitting exponentially modulated television signals, a considerably lower signal input level at the amplifier input can be employed, owing to the much higher permitted noise level than with linear or amplitude modulated signals. An input level in the order of magnitude of 45 dB$\mu$V appears to be sufficient for correct operation. This is approximately 30 dB below the conventional level in cable television networks. The attenuation of coax-3 cables at 500 m and 1750 MHz amounts to approximately 45 dB. For the purposes of loss in filters and such like the gain per amplifier output should be approximately 50 dB. This means that the output level of the amplifiers for amplification of the exponentially modulated television signals should be of the order of magnitude of 90 to 100 dB$\mu$V. These levels are below even the signal levels used for the UHF television band. The problems outlined above which arise with amplifiers having a high output level, (radiation, power supply, heat and the like), do not occur at these signal levels. The requirements with respect to the input level, gain and output level of the amplifiers for amplification of the exponentially modulated television signals according to the invention are found to leave a sufficient margin to enable the use of amplifier cascading. At the same time it was found that the remaining components used in the cable network, such as branch elements, mini-star distribution elements and connectors and such like, in each case up to 1450 MHz, had no significant effect on the distribution of television signals above the UHF frequency band as proposed.

A possible system concept with respect to the required signal levels and gains is represented in tables I, II and III. Table I relates to a UHF/VHF split band cable television network in which the trunk network is suitable only for transmission in the VHF band. Table II represents a VHF/UHF broad band cable television network, with signal distribution in the VHF band only on the trunk network. Table III relates to an advanced cable television network in which the trunk network as well as the district and drop networks are suitable for signal distribution in the VHF and UHF television frequency bands. This is indicated in the table as CAI-plus. The signal levels between 44 and 60 dB$\mu$V achieved on the terminals are more than sufficiently above the threshold levels of present satellite receivers which are of the order of magnitude of 35 dB$\mu$V.

Table IV shows a possible channel grouping (allocation) of the superband according to the invention, based on a channel interval of 29.5 MHz. This channel bandwidth corresponds to the channel bandwidth which is used by currently popular satellites and for which a large variety of consumer equipment is available. The allocation plan is divided into a first band to 1450 MHz, to be used for a first capacity expansion, a second band from 1450 to 1750 MHz, a location for a pilot tone (1752 MHz) and a third band to 2050 MHz. With this proposal an overall expansion of the cable television network can be accomplished by 37 PAL or MAC channels, the PAL channels each having a good eight extra sound channels available to them in accordance with the standard agreed for satellite programmes.

Expansion of the channel capacity of the existing cable television network in accordance with the invention essentially requires no other adjustments other than installing amplifiers for amplification of the exponentially modulated television signals and of course setting up suitable equipment in the head-end station.

The invention is of course not limited to the illustrative embodiments discussed above. To summarise, the invention makes possible the expansion of the channel capacity of all existing cable television networks, to 100 or more channels, in a relatively inexpensive and simple manner, and is suited to distribution of both analog and digital (broadcasting) signals.

14

TABLE I

| System concept (Overview of signal levels) | | Split Band | | Superband | |
|---|---|---|---|---|---|
| | | VHF 300 MHz | UHF 860 MHz | Superband 950 MHz | Superband 1750 MHz |
| Head-end Station | output 1x or 2x | 95 dBμV | | 90 dBμV | 94 dBμV |
| Cable attenuation | 550 m Coax 3 | 18.8 dB | | 33.5 dB | 45.5 dB |
| Trunk (1 to n amplifiers) | input | 76.2 dBμV | | 56.5 dBμV | 48.5 dBμV |
| Trunk (1 to n amplifiers) | output 1x or 2x | 95 dBμV | | 90 dBμV | 94 dBμV |
| Cable attenuation | 550 m Coax 3 | 18.8 dB | | 33.5 dB | 45.5 dB |
| District centre | input | 76.2 dBμV | | 56.5 dBμV | 48.5 dBμV |
| | output 4x | 98 dBμV | 102 dBμV | 86 dBμV | 90 dBμV |
| Cable attenuation | 550 m Coax 3 | 18.8 dB | 31.9 dB | 33.5 dB | 45.5 dB |
| Group amplifier | input | 79.2 dBμV | 70.1 dBμV | 52.5 dBμV | 44.5 dBμV |
| | output 2x | 108.0 dBμV | 101 dBμV | 90 dBμV | 94 dBμV |
| Cable attenuation | 350 m Coax 3 (175 m Coax 6) | 12.0 dB | 20.3 dB | 21.3 dB | 29.0 dB |
| Output amplifier | input | 96.0 dBμV | 80.7 dBμV | 68.7 dBμV | 65.0 dBμV |
| attenuation/gain | | -1.0 dB | 24.0 dB | 18.0 dB | 27.0 dB |
| distribution attentuation | | -4.0 dB | -4.0 dB | -4.0 dB | -4.0 dB |
| Available level for 24 terminals 2x | | 91.0 dBμV | 100.0 dBμV | 82.0 dBμV | 88.0 dBμV |

| | | | | | |
|---|---|---|---|---|---|
| Distribution attenuation | | 23.00 dB | 23.00 dB | 23.00 dB | 23.00 dB |
| Cable attenuation | 45 m Coax 12 | 6.2 dB | 10.4 dB | 11.0 dB | 14.9 dB |
| Level on terminal connecting box** | | 61.8 dBμV | 66.6 dBμV | 48.0 dBμV | 50.1 dBμV |

| | | | | | |
|---|---|---|---|---|---|
| Distribution attenuation | | 14.00 dB | 14.00 dB | 14.00 dB | 14.00 dB |
| Cable attenuation | 85 m Coax 12 | 11.6 dB | 19.7 dB | 20.7 dB | 28.1 dB |
| Level on terminal connecting box** | | 65.4 dBμV | 66.3 dBμV | 47.3 dBμV | 45.9 dBμV |

** Design requirement minimum:      60.0 dBμV    63.5 dBμV     44.0 dBμV   44.0 dBμV

TABLE II

| System concept (Overview of signal levels) | | Split Band VHF 40 MHz | Split Band UHF 860 MHz | Superband 950 MHz | Superband 1750 MHz |
|---|---|---|---|---|---|
| Head-end Station | output 1x or 2x | 95 dBµV | | 90 dBµV | 94 dBµV |
| Cable attenuation | 550 m Coax 3 | 6.9 dB | | 33.5 dB | 45.5 dB |
| Trunk (1 to n amplifiers) | input | 88.1 dBµV | | 56.5 dBµV | 48.5 dBµV |
| Trunk (1 to n amplifiers) | output 1x or 2x | 95 dBµV | | 90 dBµV | 94 dBµV |
| Cable attenuation | 550 m Coax 3 | 6.9 dB | | 33.5 dB | 45.5 dB |
| District centre | input | 88.1 dBµV | | 56.5 dBµV | 48.5 dBµV |
| | output 4x | 99 dBµV | 99 dBµV | 86 dBµV | 90 dBµV |
| Cable attenuation | 550 m Coax 3 | 6.0 dB | 27.8 dB | 29.3 dB | 39.7 dB |
| Group amplifier | input | 93.0 dBµV | 71.2 dBµV | 56.7 dBµV | 50.3 dBµV |
| | output 2x | 99.0 dBµV | 99 dBµV | 90 dBµV | 94 dBµV |
| Cable attenuation | 480 m Coax 3 (240 m Coax 6) | 6.0 dB | 27.8 dB | 29.3 dB | 39.7 dB |
| Output amplifier | input | 93.0 dBµV | 71.2 dBµV | 60.7 dBµV | 54.3 dBµV |
| Available level for 24 terminals | 2x | 97.0 dBµV | 97.0 dBµV | 82.0 dBµV | 88.0 dBµV |

| | | VHF 40 MHz | UHF 860 MHz | Superband 950 MHz | Superband 1750 MHz |
|---|---|---|---|---|---|
| Distribution attenuation | | 27.00 dB | 20.00 dB | 20.00 dB | 20.00 dB |
| Cable attenuation | 45 m Coax 12 | 2.3 dB | 10.4 dB | 11.0 dB | 14.9 dB |
| Level on terminal connecting box** | | 67.7 dBµV | 66.6 dBµV | 51.0 dBµV | 53.1 dBµV |

| | | VHF 40 MHz | UHF 860 MHz | Superband 950 MHz | Superband 1750 MHz |
|---|---|---|---|---|---|
| Distribution attenuation | | 29.00 dB | 11.00 dB | 11.00 dB | 11.00 dB |
| Cable attenuation | 85 m Coax 12 | 4.3 dB | 19.7 dB | 20.7 dB | 28.1 dB |
| Level on terminal connecting box** | | 63.7 dBµV | 66.3 dBµV | 50.3 dBµV | 48.9 dBµV |

** Design requirement minimum:  60.0 dBµV   63.5 dBµV   44.0 dBµV   44.0 dBµV

TABLE III

| System concept<br>(Overview of signal levels) | | CAI-Plus | | Superband | |
|---|---|---|---|---|---|
| | | VHF<br>300 MHz | UHF<br>860 MHz | Superband<br>950 MHz | Superband<br>1750 MHz |
| Head-end Station | output 1x or 2x | 95 dBµV | 106 dBµV | 90 dBµV | 94 dBµV |
| Cable attenuation | 550 m Coax 3 | 18.8 dB | 31.9 dB | 33.5 dB | 45.5 dB |
| Trunk (1 to n amplifiers) | input | 76.2 dBµV | 74.1 dBµV | 56.5 dBµV | 48.5 dBµV |
| Trunk (1 to n amplifiers) | output 1x or 2x | 95 dBµV | 106 dBµV | 90 dBµV | 94 dBµV |
| Cable attenuation | 550 m Coax 3 | 18.8 dB | 31.9 dB | 33.5 dB | 45.5 dB |
| District centre | input | 76.2 dBµV | 74.1 dBµV | 56.5 dBµV | 48.5 dBµV |
| | output        4x | 98 dBµV | 102 dBµV | 86 dBµV | 90 dBµV |
| Cable attenuation | 550 m Coax 3 | 18.8 dB | 31.9 dB | 33.5 dB | 45.5 dB |
| Group amplifier | input | 79.2 dBµV | 70.1 dBµV | 52.5 dBµV | 44.5 dBµV |
| | output        2x | 105.5 dBµV | 116 dBµV | 90 dBµV | 94 dBµV |
| Cable attenuation | 228 m Coax 3 | 7.8 dB | 13.2 dB | 13.9 dB | 18.9 dB |
| Ministar<br>(VHF/UHF passive smoothers) | input | 97.7 dBµV | 102.8 dBµV | 76.1 dBµV | 75.1 dBµV |
| attenuation/gain | | -1.0 dB | -1.0 dB | 10.0 dB | 17.0 dB |
| distribution attentuation | | -4.0 dB | -4.0 dB | -4.0 dB | -4.0 dB |
| Available level for 24 terminals | 2x | 92.7 dBµV | 97.8 dBµV | 82.0 dBµV | 88.0 dBµV |

| | | | | | |
|---|---|---|---|---|---|
| Distribution attenuation | | 23.00 dB | 23.00 dB | 23.00 dB | 23.00 dB |
| Cable attenuation | 45 m Coax 12 | 6.2 dB | 10.4 dB | 11.0 dB | 14.9 dB |
| Level on terminal connecting box** | | 63.5 dBµV | 64.3 dBµV | 48.0 dBµV | 50.1 dBµV |

| | | | | | |
|---|---|---|---|---|---|
| Distribution attenuation | | 14.00 dB | 14.00 dB | 14.00 dB | 14.00 dB |
| Cable attenuation | 85 m Coax 12 | 11.6 dB | 19.7 dB | 20.7 dB | 28.1 dB |
| Level on terminal connecting box** | | 67.0 dBµV | 64.1 dBµV | 47.3 dBµV | 45.9 dBµV |

** Design requirement minimum :                  60.0 dBµV    63.5 dBµV        44.0 dBµV    44.0 dBµV

TABLE IV

Superband Channel Allocation

| | Channel No. | Frequency (MHz) |
|---|---|---|
| | 1 | 964.25 |
| | 2 | 993.75 |
| | 3 | 1023.25 |
| | 4 | 1052.75 |
| | 5 | 1082.25 |
| | 6 | 1111.75 |
| | 7 | 1141.25 |
| Superband 1 | 8 | 1170.75 |
| | 9 | 1200.25 |
| | 10 | 1229.75 |
| | 11 | 1259.25 |
| | 12 | 1288.75 |
| | 13 | 1318.25 |
| | 14 | 1347.75 |
| | 15 | 1377.25 |
| | 16 | 1406.75 |
| | 17 | 1436.25 |
| | | |
| | 18 | 1465.75 |
| | 19 | 1495.25 |
| | 20 | 1524.75 |
| | 21 | 1554.25 |
| | 22 | 1583.75 |
| | 23 | 1613.25 |
| | 24 | 1642.75 |
| Superband 2 | 25 | 1672.25 |
| | 26 | 1701.75 |
| | 27 | 1731.25 |
| | | |
| Pilot | | 1752.00 |
| | | |
| | 28 | 1775.00 |
| | 29 | 1804.50 |
| | 30 | |
| | 31 | 1863.50 |
| | 32 | 1893.00 |
| | 33 | 1922.50 |
| | 34 | 1952.00 |
| | 35 | 1981.50 |
| | 36 | 2011.00 |
| | 37 | 2040.50 |

Channel bandwidth = 29.50 MHz
Frequency deviation p-p = 16 MHz

## Claims

1. Method for signal distribution via a cable television network, in particular a cable television network composed of coaxial cable, <u>characterised in that</u>, the signals are distributed via the cable television network in exponentially modulated form at frequencies above the UHF television frequency band, and together with the other signals, said exponentially modulated signals being amplified separately from the other signals in the cable television network, using frequency split band techniques.

2. Method according to claim 1, wherein said exponentially modulated signals, in particular television signals, are distributed in frequency modulated (FM) form in the 950 - 2050 MHz frequency band, in particular in the 950 - 1750 MHz frequency band.

3. Method according to claim 2, wherein the FM television signals are distributed in a channel allocation plan having a minimum channel bandwidth of 18 MHz, in particular a channel bandwidth of 29.5 MHz.

4. Method according to claim 1, 2 or 3, wherein the frequency band between 860 - 950 MHz is used for frequency splitting of said exponentially modulated signals from the other signals in the cable network.

5. Method according to claim 1, 2, 3 or 4, wherein exponentially modulated television signals received are converted to the baseband and/or, in amplitude modulated (AM) form, to the VHF and/or UHF television frequency bands at a terminal or group of terminals.

6. Method according to claim 5, wherein exponentially modulated television signals in the 2050-3000 MHz frequency band are converted.

7. Method according to claim 6, wherein said frequency band is integrally converted.

8. System for the distribution of (broadcasting) signals, comprising receiving means for receiving (broadcasting) signals supplied, means for converting the signals received to a desired frequency band and a plurality of amplifiers connected in cascade which comprise first amplification means for the amplification of signals in a first frequency band comprising frequencies in and/or below the UHF television frequency band for the distribution of the signals to individual terminals via a cable network, in particular a network composed of coaxial cable, characterised by means for distributing (broadcasting) signals supplied in exponentially modulated form at frequencies above the UHF television frequency band, wherein the amplifiers comprise second amplification means for the amplification of signals in a second frequency band comprising frequencies above the UHF television frequency band, filtering means being arranged at the input and output sides of the amplifiers for splitting the signals to be amplified into said first and second frequency band and for combining the amplified signals for distribution via the cable network, respectively.

9. System according to claim 8, wherein the first frequency band comprises frequencies up to 860 MHz and the second frequency band comprises frequencies over 950 MHz.

10. System according to claim 8 or 9, wherein the means for distributing television signals in exponentially modulated form are equipped to transmit said signals in frequency modulated (FM) form within channels having a practical bandwidth of 18 MHz and in particular having a channel bandwidth of 29.5 MHz.

11. System according to claim 8, 9 or 10, wherein conversion means are provided for a terminal or group of terminals, for the conversion of exponentially modulated television signals to the baseband and/or, in amplitude modulated (AM) form, to the VHF and/or UHF television frequency bands.

12. Amplifier for use in a cable television network for the distribution of (broadcasting) signals, in particular a cable television network composed of coaxial cable, characterised by first filter means for transmitting signals in a first frequency band comprising frequencies in and/or below the UHF television frequency band, second filter means for transmitting signals in a second frequency band comprising frequencies above the UHF television frequency band, and with amplification means connected downstream of the filter means for the amplification of signals transmitted by the second filter means in said second frequency band, wherein the input side of the first and second filter means being linked together and forming the amplifier input, and the output sides of the first filter means and the amplification means forming first and second amplifier outputs, respectively.

13. Amplifier according to claim 12, comprising further first and second filter means, wherein the input side of the further first filter means form a further input of the amplifier and the input side of the further second filter means is connected to the output side of the amplification means, and wherein the output sides of the first and second filter means are linked together and form the second amplifier output.

14. Amplifier according to claim 13, wherein adjustable attenuation means are arranged between the output side of the first filter means and the input side of the further first filter means.

15. Amplifier according to claim 12, 13 or 14, comprising one or more multi-directional branching elements arranged in the second amplifier output for the provision of a multiple second amplifier output.

16. Amplifier for use in a cable television network for the distribution of (broadcasting) signals, in particular a cable television network composed of coaxial cable, characterised by first filter means for transmitting signals in a first frequency band comprising frequencies in and/or below the UHF television frequency band, second filter means for transmitting signals in a second frequency band comprising frequencies above the UHF television frequency band, wherein said second filter means are connected downstream of amplification means so as to transmit amplified signals in said second frequency band, the output sides of the first and second filter means being linked together and forming the amplifier output, and the input sides of the first filter means and the amplification means forming first and second amplifier inputs, respectively.

17. Amplifier according to claim 12, 13, 14, 15 or 16, wherein the first filter means are equipped to transmit signals in a first frequency band comprising frequencies in and/or below 860 MHz and the second filter means are equipped to transmit signals in a second frequency band comprising frequencies above 950 MHz.

18. Amplifier according to claim 17, wherein the filter means, in particular the first filter means, consist of multiple sub-filters.

19. Amplifier according to claim 17 or 18, wherein the first and second filter means are integral.

20. Amplifier according to one or more of claims 12 to 19, comprising means for automatic gain control.

21. Amplifier according to claim 20, wherein the gain control means comprise a pilot tone detection circuit for the detection of at least one pilot tone signal transmitted in said second frequency band, and adjustable attenuator means coupled to the pilot tone detection circuit, said pilot tone detection circuit and attenuator means are connected downstream of the amplification means, the attenuator means during operation being adjustable by the pilot tone detection circuit such that the pilot tone is provided with a predetermined amplitude at the amplifier output.

20

fig-1

Fig-2

# fig - 3

# fig - 4

Fig-5

Fig-6

24

fig - 7

fig - 8